# EUROPÄISCHE PATENTSCHRIFT

(11) **EP 0 593 468 B1**
(45) Veröffentlichungstag und Bekanntmachung des Hinweises auf die Patenterteilung: **04.10.1995**
(21) Anmeldenummer: 91912181.4
(22) Anmeldetag: 01.07.1991
(51) Int. Cl.: B01D 29/41, B01D 29/70, B01D 29/74, B01D 29/96

(54) **FLÜSSIGKEITSFILTER MIT EINEM DRUCKBEHÄLTER UND EINEM DARAN ANGEORDNETEN, VON EINER VERTIKALEN FILTERPAKETWELLE ANTREIBBAREN FILTERPAKET**
FILTER FOR LIQUIDS WITH A PRESSURIZED CONTAINER AND A FILTERING CARTRIDGE DRIVEN BY A VERTICAL SHAFT
FILTRE POUR LIQUIDES AYANT UN RECIPIENT SOUS PRESSION AVEC UNE CARTOUCHE FILTRANTE ENTRAINEE PAR UN ARBRE VERTICAL

(30) Priorität: 05.07.1990 DE 4021372
(43) Veröffentlichungstag der Anmeldung: 27.04.1994
(73) Patentinhaber: NEFF, Frank, D-55276 Oppenheim (DE)
(72) Erfinder: NEFF, Frank, D-55276 Oppenheim (DE)
(74) Vertreter: Bardehle, Heinz, Dipl.-Ing.
(86) Internationale Anmeldenummer: EP9101227
(87) Internationale Veröffentlichungsnummer: WO9200790

(56) Entgegenhaltungen:
- DE-A- 1 270 006
- DE-A- 2 902 444
- DE-A- 3 409 116

## Beschreibung

Die Erfindung bezieht sich auf einen Flüssigkeitsfilter nach dem Oberbegriff des Anspruchs 1.

Ein derartiger Flüssigkeitsfilter ist aus der DE-OS 34 09 116 bekannt. Bei diesem Flüssigkeitsfilter wird die zu filternde Flüssigkeit über eine auf den Druckbehälter aufgesetzte, glockenartige Kammer zugeführt, die sich nach unten hin in den Innenraum des Druckbehälters öffnet. Die Kammer wird von der Filterpaketwelle durchsetzt und trägt an ihrem aus der Kammer herausragenden Ende den Antrieb für die Filterpaketwelle. Die gefilterte Flüssigkeit gelangt in die als Rohr ausgebildete Filterpaketwelle über radiale Öffnungen und wird am unteren Ende der Filterpaketwelle, die aus dem Druckbehälter herausragt, über einen Ableitungsstutzen abgeleitet. Der Druckbehälter wird nach unten hin durch eine Bodenplatte abgeschlossen, die mit ihrem Rand auf einem nach innen konisch verlaufenden unteren Wandteil des Druckbehälters über eine Boden-Auflagedichtung dichtend aufliegt. Zur Reinigung des Filters wird nach Absperrung der Zufuhr von zu filternder Flüssigkeit und vollständiger Leerung des Flüssigkeitsfilters die Bodenplatte angehoben, die zu diesem Zweck auf der Filterpaketwelle verschiebbar gelagert ist. Damit wird der Druckbehälter nach unten hin geöffnet, woraufhin durch Einleiten einer Waschflüssigkeit in den Druckbehälter und Antrieb der Filterpaketwelle der Druckbehälter und das Filterpaket gereinigt werden. Die Waschflüssigkeit mit den Filtrationsrückständen wird dann nach unten hin aus dem durch die angehobene Bodenplatte geöffnern Druckbehälter ausgeschwemmt.

Beim Antrieb der Filterpaketwelle wird diese in Roation versetzt, und zwar üblicherweise mit einer Drehzahl von etwa 400 bis 500 Umdrehungen/Minute. Da am unteren Ende der Filterpaketwelle der oben erwähnte Ableitungsstutzen angeschlossen ist, muß zwischen dem Ende der Filterpaketwelle und dem Ableitungsstutzen eine Drehdichtung angeordnet sein, die einerseits den vollen, in dem Filtersystem herrschenden Druck aushält und außerdem die bei der Rotation entstehende Reibung.

Der Erfindung liegt die Aufgabe zugrunde, dieses Abdichtungsproblem zu beseitigen. Erfindungsgemäß geschieht dies durch die kennzeichnenden Merkmale des Patentanspruchs 1.

Aufgrund dieser Führung der gefilterten Flüssigkeit durch den scheibenförmigen Raum läßt sich erreichen, daß zur Ableitung der gefilterten Flüssigkeit die Filterpaketwelle überhaupt nicht benötigt wird, so daß sie also auch an keinen Ableitungsstutzen anzuschließen ist. Damit entfällt eine Drehdichtung zwischen Filterpaketwelle und Ableitungsstutzen gänzlich. Bei am unteren Wandteil des Druckbehälters anliegender Bodenplatte und anliegender Abschlußplatte läßt sich die von dem scheibenförmigen Raum zwischen Bodenplatte und Abschlußplatte geleitete Flüssigkeit zu einer Öffnung in dem unterem Wandteil des Druckbehälters führen, wobei diese Öffnung in der Höhe des scheibenförmigen Raumes liegt. Die gefilterte Flüssigkeit kann dann aus dem Druckbehälter in den mit diesem in Verbindung stehenden scheibenförmigen Raum und aus diesem durch die genannte Öffnung nach außen gelangen, ohne daß dabei die Filterpaketwelle zur Führung der gefilterten Flüssigkeit notwendig ist.

Wesentlich ist dabei auch, daß die Öffnung zur Ausleitung der gefilterten Flüssigkeit aus dem Druckbehälter in Höhe des Raumes zwischen Bodenplatte und Abschlußplatte erfolgt, wodurch sich eine gegenüber der Ausleitung über die Filterpaketwelle verkürzte Bauhöhe ergibt.

Zweckmäßig wird Bodenplatte und Abschlußplatte an der Filterpaketwelle befestigt und die Filterpaketwelle axial verschiebbar gelagert sowie an ihr im Bereich des Oberteils des Druckbehälters ein Deckel derart angebracht daß mit axialem Anheben der Filterpaketwelle der Deckel des Druckbehälters von diesem abhebt und dabei eine zwischen Deckel und Druckbehälter angeordnete Deckelauflagedichtung öffnet.

Bei dieser Ausführungsform wird die axiale Verschiebung von Bodenplatte und Abschlußplatte durch eine entsprechende Verschiebung der Filterpaketwelle herbeigeführt, die somit einen günstig gestalteten Betätigungsmechanismus bildet. Dabei wird auch im Bereich des Deckels des Druckbehälters dafür gesorgt, daß dort keine Drehdichtung erforderlich ist, da bei angehobener Filterpaketwelle die Deckelauflagedichtung geöffnet ist.

Um Toleranzen hinsichtlich des Abstandes zwischen Deckel und Bodenplatte einerseits und der jeweiligen Lage der Deckelauflagedichtung und der Bodenauflagedichtung andererseits in einfacher Weise berücksichtigen zu können, gestaltet man die Anordnung zweckmäßig so, daß der Deckel axial verschiebbar auf der Filterpaketwelle angeordnet ist und mittels einer Feder gegen die Deckelauflagedichtung gedrückt wird und ein Anschlag zum Abheben des Deckels von der Deckelauflagedichtung an der Filterpaketwelle derart mit Abstand vom Deckel angeordnet ist, daß beim Absenken der Filterpaketwelle zunächst die Deckel-Auflagedichtung und danach die Boden-Auflagedichtung schließt.

Aufgrund dieses axialen Spiels des Deckels gegenüber der Filterpaketwelle können Ungenauigkeiten hinsichtlich des Abstandes zwischen Deckel und Bodenplatte einerseits und der betreffenden Auflagedichtung andererseits ausgeglichen werden. Ein beispielsweise aufgrund von Erhitzung sich gegenüber der Filterpaketwelle geringfügig ausdehnender Druckbehälter führt dann nicht zu einer unvollkommenen Schließung einer der Auflagedichtungen, da die mit Spiel betätigbare Deckel-Auflagedichtung einer derartigen Ausdehnung folgen kann. Bei Aufliegen der Boden-Auflagedichtung und der Abschluß-Auflagedichtung gleicht also das Spiel der Deckel-Auflagedichtung Ungenauigkeiten aus, wobei sämtliche Auflagedichtungen in gewünschter Weise geschlossen gehalten werden.

Zweckmäßig gestaltet man die Boden-Auflagedichtung aus zwei koaxialen O-Ringen, die mit Abstand voneinander an dem unteren Wandteil aufliegen, wobei im Abstandbereich der O-Ringe in dem unteren Wandteil eine Bohrung zur Ableitung von Flüssigkeit angebracht ist, die an einem O-Ring vorbeigetreten ist.

Durch diese Gestaltung läßt sich einerseit die Dichtigkeit der Boden-Auflagedichtung verbessern, andererseits gestattet die Gestaltung ein sofortiges Erkennen einer Undichtigkeit entweder des einen oder des anderen O-Ringes durch Austreten von Flüssigkeit aus der Bohrung.

In den Figuren ist ein Ausführungsbeispiel der Erfindung dargestellt.

Es zeigen:
- Figur 1: den Flüssigkeitsfilter in seiner Betriebslage;
- Figur 2: den gleichen Flüssigkeitsfilter in der Reinigungsposition;
- Figur 3: einen Ausschnitt aus Figur 2 im Bereich der Bodenauflagedichtung.

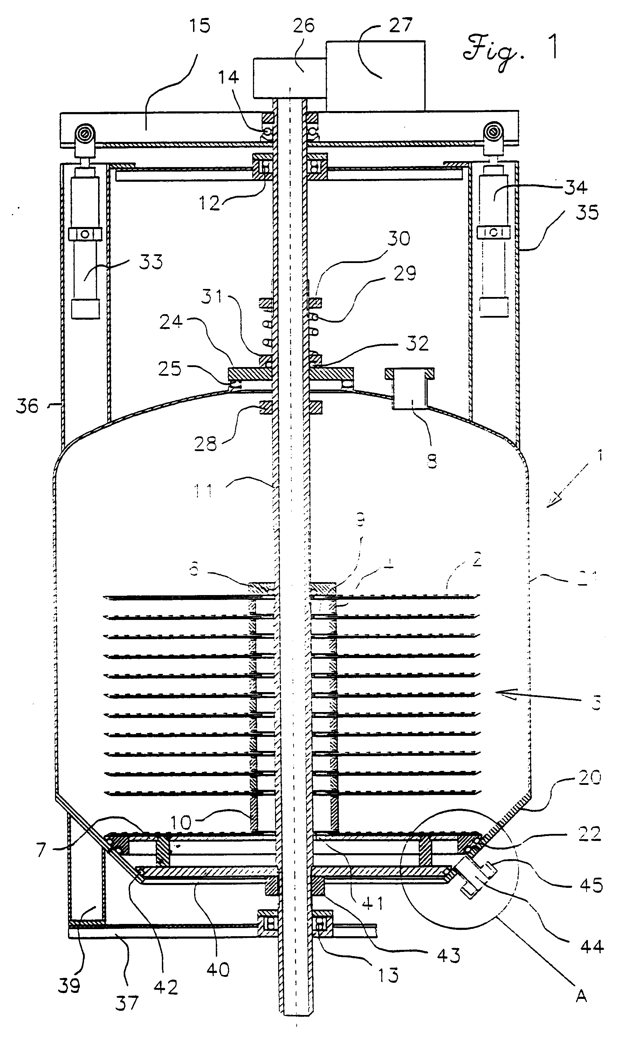

Der in Figur 1 dargestellte Flüssigkeitfilter besteht aus dem Druckbehälter 1, im dem das aus übereinander angeordneten Filterelementen 2 aufgebaute Filterpaket 3 angeordnet ist. Die einzelnen Filterelemente 2 sind durch Teiler gebildet, auf denen in bekannter Weise jeweils eine Schicht aus Kieselgur aufgeschwemmt ist. Die Filterelemente 2 sind durch hohlzylindrische Distanzstücke 4 voneinander getrennt. Die Distanzstücke 4 bilden in ihrer Gesamtheit einen Hohlzylinder 10, der sich als Axialkanal von einer Verschraubung 6 ab nach unten hin bis zu der Bodenplatte 7 erstreckt.

Die über den Einlaßstutzen 8 zugeführte, zu filternde Flüssigkeit gelangt in den Innenraum des Druckbehälters 1 und fließt dann über die Filterelemente 2 in Richtung auf den Hohlzylinder 10, wobei die die einzelnen Distanzstücke 4 radial nach innen jeweils durchsetzenden Filterelemente 2 in ihrem Inneren in bekannter Weise die zu filternde Flüssigkeit in den Innenraum des Hohlzylinders 10 transportieren. Die Bereite der Filterelemente 2 innerhalb des Hohlzylinders 10 besitzen in axialer Richtung Durchlässe 9, so daß sich gefilterte Flüssigkeit von jedem Filterelement 2 her im Hohlzylinder 5 durch die Durchläße 9 in Richtung auf das untere Ende des Hohlzylinders 10 bewegen kann.

Das Filterpaket 3 mit dem Hohlzylinder 10 wird von der Filterpaketwelle 11 getragen. Die Filterpaketwelle 11, die, wie später erläutert, zur Filterreinigung in Rotation versetzt wird, ist im Bereich ihres oberen Endes in dem Radiallager 12 und im Bereich ihres unteren Endes in dem Radiallager 13 gelagert, die beide jeweils die Rotation der Filterpaketwelle 11 ermöglichen. In axialer Richtung wird die Filterpaketwelle 11 durch das Axiallager 14 getragen, das in einer Traverse 15 angebracht ist, auf deren Funktion weiter unten näher eingegangen wird.

Der Abschluß des Druckbehälters 1 nach unten hin erfolgt bei dem dargestellten Ausführungsbeispiel durch die Bodenplatte 7, die mit ihrem Rand auf dem unteren Wandteil 20 aufliegt, in dem die zylindrische Außenwand 21 des Druckbehälters ausläuft. Das untere Wandteil 20 verläuft nach innen zu nach Art eines Konus, so daß die Bodenplatte 7 mit ihrem Rand eine durch diesen Konus definierte Auflagestelle erhält. Die Auflagestelle wird hier durch die Boden-Auflagedichtung 22 gebildet, durch die der Druckbehälter 1 nach unten hin dichtend abgeschlossen wird. Die Bodenplatte 7 ist an der Filterpaketwelle 11 befestigt, und zwar mittels der dichtenden Verschraubung 43.

Zur Ableitung der gefilterten Flüssigkeit dient hier ein scheibenartiger Raum zwischen der Bodenplatte 7 und der mit Abstand und parallel zu dieser angeordneten Abschlußplatte 40.

Der Raum zwischen diesen beiden Platten steht mit dem Innenraum des Druckbehälters 1 über axiale Durchbrüche 41 in der Bodenplatte 7 in Verbindung. Diese axialen Durchbrüche 41 haben Zugang zum Innenraum des Hohlzylinders 10, so daß also durch die Filterelemente 2 gefilterte Flüssigkeit aus dem Hohlzylinder 10 über die Durchbrüche 41 in den Raum zwischen Bodenplatte 7 und Abschlußplatte 40 gelangt. Dieser Raum wird nun einerseits durch die Boden-Auflagedichtung 22 und andererseits durch die Abschluß-Auflagedichtung 42 abgeschlossen. Die Abschlußplatte 40 ist ähnlich wie die Bodenplatte 7 über die Schraubverbindung 43 an der Filterpaketwelle 11 befestigt, so daß bei axialer Verschiebung der Filterpaketwelle 11 die Bodenplatte 7 und die Abschlußplatte 40 unter Aufrechterhaltung dieses Abstandes mitgenommen werden. Die Ableitung von gefilterter Flüssigkeit aus dem Raum zwischen Bodenplatte 7 und Abschlußplatte 40 erfolgt mittels des Ableitungsstutzes 44, der über die Verschraubung 45 an irgendeine weiterführende Leitung angeschlossen werden kann. Wie ersichtlich, erstreckt sich der Ableitungsstutzen 44 nur geringfügig nach unten über den Druckbehälter 1 hinaus. Dies stellt im allgemeinen für die Benutzer derartiger Flüssigkeitsfilter einen wesentlichen Vorteil dar, da es bei diesen meist auf geringe Bauhöhe entscheidend ankommt.

Nach oben hin ist der Druckbehälter 1 durch den Deckel 24 abgeschlossen, der in der in Figur 1 dargestellten Betriebslage dichtend auf der Deckel-Auflagedichtung 25 aufliegt. In der dargestellten Betriebslage kann daher über den Einlaßstutzen 8 unter Druck stehende, zu filternde Flüssigkeit durch den Druckbehälter 1 hindurch gedrückt werden, bis die gefilterte Flüssigkeit am Ableitungsstutzen 44 austritt. Der Deckel 24 ist axial verschiebbar auf der Filterpaketwelle 11 gelagert.

Wie ersichtlich, sind im Bereich des Druckbehälters 1 vier Auflagedichtungen vorgesehen, nämlich beim Deckel 24 die Deckelauflagedichtung 25, bei der Bodenplatte 7 die aus dem O-Ring 22 bestehende Boden-Auflagedichtung, daneben der O-Ring 47 und bei der Abschlußplatte 40 die Abschluß-Auflagedichtung 42. Diese Auflagedichtungen ermöglichen es nun, bei Rotation des Filterpaketes 3 eine Reibbelastung von diesen Dichtungen auszuschließen.

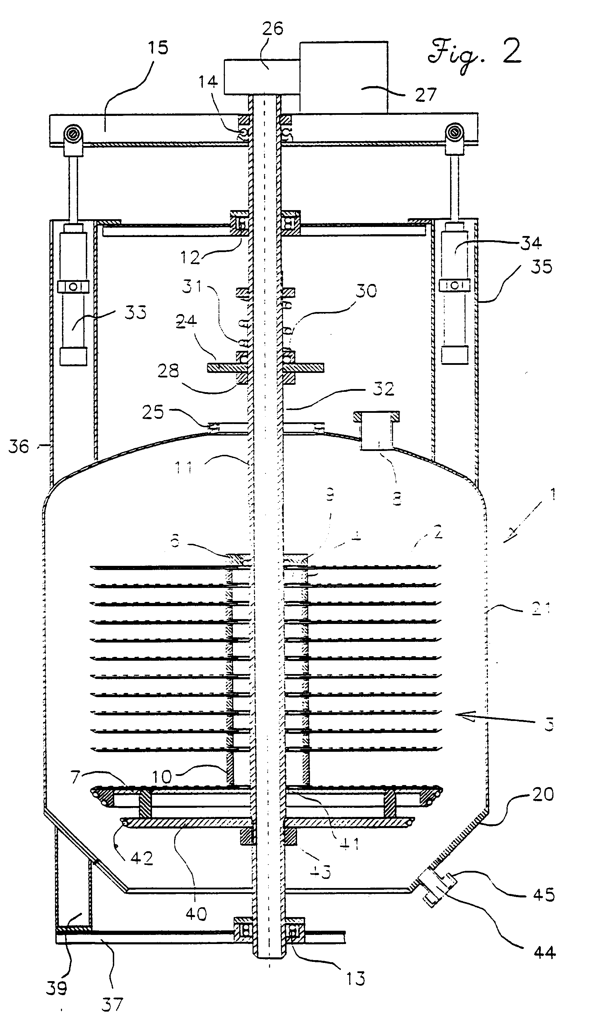

Die Rotation des Filterpaketes 3 erfolgt in üblicher und bekannter Weise zur Reinigung des Filters, wozu am oberen Ende der Filterpaketwelle 11 das Getriebe 26 und der Antriebsmotor 27 angeordnet sind. Der Antreibsmotor 27 wird von der oben bereits erwähnten Traverse 15 mit getragen. Um nun eine Reibbelastung von den Auflagedichtungen 25, 22, 47 and 42 bei der Rotation der Filterpaketwelle 11 fernzuhalten, wird die Filterpaketwelle aus der in Figur 1 dargestellten Betriebslage für das Filtern in axialer Richtung nach oben verschoben, bis sie die in der Figur 2 dargestellte Reinigungspositon annimmt (hierauf wird später noch eingegangen). Aufgrund dieser axialen Verschiebung der Filterpaketwelle 11 werden direkt die Bodenplatte 7 und die Abschlußplatte 40 angehoben, womit die Boden-Auflagedichtung 22/47 und die Abschluß-Auflagedichtung 42 abheben und den Innenraum des Druckbehälters 1 nach außen hin öffnen. Mit der axialen Verschiebung der Filterpaketwelle 11 nach oben hin wird auch der auf der Filterpaketwelle 11 befestigte Anschlag 28 mitgenommen, der sich in der in Figur 1 dargestellten Betriebslage zunächst in Abstand von dem Deckel 24 befindet, so daß also bei der Anhebung der Filterpaketwelle 11 zunächst die Boden-Auflagedichtung 22 mit dem ergänzenden O-Ring 47 und die Abschluß-Auflagedichtung 42 öffnen. Nach Durchlaufen des aus Figur 1 ersichtlichen Abstandes zwischen dem Anschlag 28 und dem Deckel 24 wird auch der Deckel 24 mit weiterer axialer Verschiebung der Filterpaketwelle 11 mitgenommen, wobei auch die Deckel-Auflagedichtung 25 öffnet. Es befinden sich dann alle Auflagedichtungen in abgehobenem Zustand, so daß bei daraufhin erfolgender Rotation der Filterpaketwelle 11 diese Dichtungen nicht auf Reibung beansprucht werden.

Der Abstand zwischen dem Anschlag 28 und dem Deckel 24 ist hier darum vorgesehen damit mögliche Toleranzen, Fabrikationsungenauigkeiten oder Längenveränderungen aufgrund von Temperaturschwankungen ausgeglichen werden können, die sonst unter Umständen zu einer nicht gleichmäßigen Abdichtung durch die Auflagedichtungen 25, 22 und 42 führen könnten. Dabei steht der Deckel 24 aufgrund der Schraubenfeder 29 unter Federspannung. Die Schraubenfeder 29 stützt sich einerseits an dem auf der Filterpaketwelle 11 befestigten Stellring 30 ab, sie drückt andererseits gegen das Schulterstück 31, das seinerseits auf den darunter angeordneten, als Dichtung wirkenden O-Ring 32 drückt, der dafür sorgt, daß zwischen dem Deckel 24 und der Filterpaketwelle 11 eine Abdichtung besteht. Aufgrund der beschriebenen Federvorspannung des Deckels 24 drückt dieser so lange auf die Deckel-Auflagedichtung 25, wie der Anschlag 28 sich noch in Abstand zum Deckel 24 befindet.

Die axiale Verschiebung der Filterpaketwelle 11 erfolgt hier durch eine entsprechende Bewegung der Traverse 15. Die Traverse 15 stützt sich auf die beiden Hub-Zylinder-Einheiten 33 und 34, die bei ihrer in bekannter Weise erfolgten Betätigung die Traverse 15 aus der in Figur 1 dargestellten Betriebslage in die in Figur 2 dargestellte Reinigungsposition anheben. Dabei wird über das Axiallager 14 die Filterpaketwelle 11 entsprechend mitgenommen, außerdem auch das Getriebe 26 und der Antriebsmotor 27. Die Filterpaketwelle 11 kann dabei in den Radiallagern 12 und 13 axial gleiten, ohne daß sich dabei an ihrer Zentrierung gegenüber dem Druckbehälter 1 etwas ändert.

Die beiden Hub-Zylinder-Einheiten 33 und 34 sind in Stützen 35 und 36 angebracht, die auf dem oberen Bereich des Druckbehälters 1 ruhen und an diesem angeschweißt sind.

Das Radiallager 13 ist über den Träger 37 und die daran befestige Stütze 39 am Druckbehälter 1 angebracht.

Der hier in Rede stehende Typ von Flüssigkeitsfiltern bedarf normalerweise einer Reinigung, wozu der Flüssigkeitsfilter gegenüber weiterer Zufuhr von zu filternder Flüssigkeit abgesperrt und der Druckbehälter 1 gänzlich entleert wird. Es erfolgt daraufhin die vorstehend beschriebene Anhebung der Filterpaketwelle 11 mit der Öffnung der erwähnten Auflagedichtungen. Der Flüssigkeitsfilter nimmt dann die in der Figur 2 dargestellte Reinigungsposition ein. In dieser Positon wird dem Innenraum des Druckbehälters 1 in bekannter Weise eine Waschflüssigkeit, insbesondere Wasser zugeführt, und zwar üblicherweise über im Innenraum des Druckbehälters 1 angeordnete Spritzdüsen. Die Reinigungsflüssigkeit wäscht dann sowohl das auf den Filterelementen 2 aufgeschwemmte Kieselgur und die Filterrückstände aus. Aufgrund der Rotation des Filterpaketes 3 werden dabei sowohl das Kieselgur als auch die Filtrationsrückstände abgeschleudert und fließen mit der Reinigungs- bzw. Waschflüssigkeit über das untere Wandteil 20 ab, wobei der Ablauf durch die von dem unteren Wandteil 20 abgehobene Bodenplatte 7 und Abschlußlatte 40 gewährleiste ist. Die Waschflüssigkeit, versetzt mit Kieselgur und Filtrationsrückständen, fließt dann üblicherweise in ein unter dem Flüssigkeitsfilter bereitstehendes Auffanggefäß.

Wie die Figur 2 deutlich zeigt, sind die bei dieser Ausführungsform verwendete Deckel-Auflagedichtung 25 im Bereich des Deckels 24 und die Boden-Auflagedichtung 22 mit O-Ring 47 sowie die Abschluß-Auflagedichtung 42 angehoben, so daß bei diesen Dichtungen bei Rotation der Filterpaketwelle 11 keine Reibung entstehen kann.

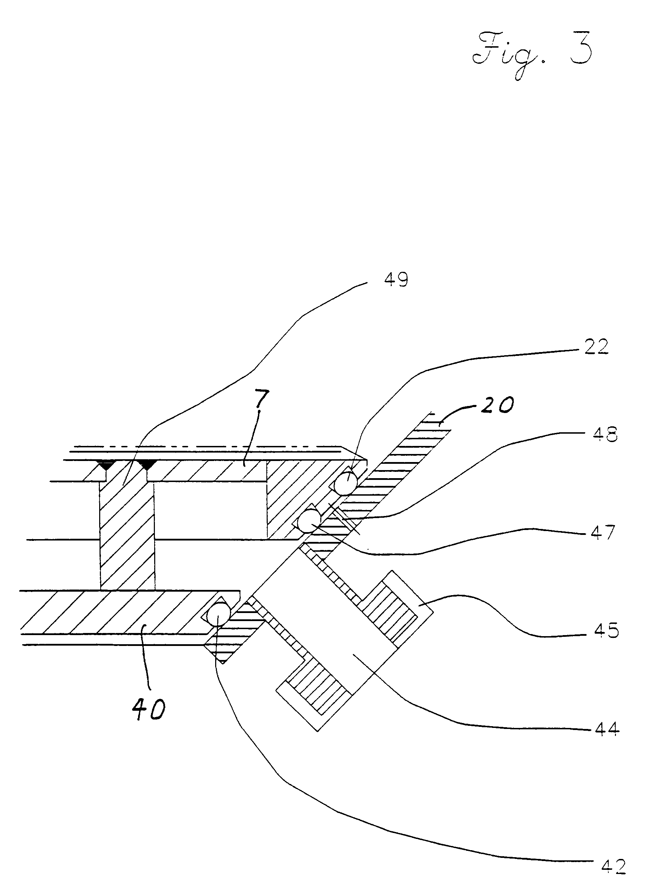

Gemäß dem in der Figur 3 dargestellten Ausschritt aus der Figur 1 (siehe Kreis A in Figur 1) ist die als O-Ring ausgebildete Boden-Auflagedichtung 22 durch den O-Ring 47 ergänzt, um die Dichtigkeit an dieser Stelle zu verbessern. Damit nun eine mögliche Undichtigkeit eines der beiden O-Ringe 22 bzw. 47 nach außen hin sichtbar in Erscheinigung treten kann, ist in das untere Wandteil 20 die Bohrung 48 eingebracht, die mit einem Durchmesser von ca. 1 bis 3 mm im Falle einer Undichtigkeit eines der beiden O-Ringe 22 bzw. 47 Füssigkeit hindurchläßt. Wenn also aus der Bohrung 48 Flüssigkeit austritt, dann erkennt das Bedienungpersonal sofort, daß im Bereich der Boden-Auflagedichtung 22/47 eine Undichtigkeit vorliegt. An der Art der austretenden Flüssigkeit sieht man dann, welcher der beiden O-Ringe 22 bzw. 47 undicht ist. Handelt es sich um ungefilterte Flüssigkeit, so ist der O-Ring 22 undicht. Tritt gefilterte Flüssigkeit aus, so ist der O-Ring 47 undicht. Sind beide O-Ringe 22 bzw. 47 undicht, so wird ein Überfließen von ungefilterter Flüsssigkeit in den Bereich der gefilterten Flüssigkeit, also in den Bereich des Ableitungsstutzes 44, dadurch verhindert, daß, da auf den äußeren Seiten der beiden O-Ringe 22 und 47 Druck herrscht, im Bereich der Bohrung 48 aber nicht, die durch die Undichtigkeit hindurchfließende Flüssigkeit sofort über die Bohrung 48 abgeleitet wird.

Die Figur 3 zeigt noch die Abstützung der Bodenplatte 7 gegenüber der Abschlußplatte 40 bzw. umgekehrt, und zwar mittels des Stegs 49. Derartige Stege 49 sind rings verteilt um die Filterpaketwelle 11 mehrfach angeordnet, wodurch der Bodenplatte 7 und der Abschlußplatte 40 die erforderliche Stabilität gegeben wird.

## Patentansprüche

1. Flüssigkeitsfilter mit einem Druckbehälter (1) und einem darin angeordneten, von einer vertikalen Filterpaketwelle (11) antreibbaren Filterpaket (3), unter dem eine Bodenplatte (7) angeordnet ist, die mit ihrem Rand auf einem nach innen konisch verlaufenden unteren Wandteil (20) des Druckbehälters (1) über eine Boden-Auflagedichtung (22) abdichtend aufliegt, wobei der untere Wandteil (20) des Druckbehälters (1) eine untere, durch die Bodenplatte (7) verschließbare Öffnung des Druckbehälters (1) freiläßt, und zur Reinigung durch Anheben der Bodenplatte (7) der Druckbehälter (1) nach außen geöffnet und das Filterpaket (3) durch einen Antrieb der Filterpaketwelle (11) die mit einem Axialkanal zur Ausleitung der gefilterten Flüssigkeit versehen ist in Rotation versetzbar ist, **dadurch gekennzeichnet,** daß unterhalb der Bodenplatte (7) mit Abstand und parallel zu dieser eine Abschlußplatte (40) angeordnet ist, welche letztere ebenfalls mit ihrem Rand auf dem unteren Wandteil (20) des Druckbehälters (1) über eine Abschluß-Auflagedichtung (42) aufliegt, mit der Bodenplatte (7) von dem unteren Wandteil (20) abhebbar ist und mit der Bodenplatte (7) einen mit dem Axialkanal (10) in Verbindung stehenden scheibenförmigen Raum einschließt, über den bei aufliegender Bodenplatte (7) und Abschlußplatte (40) die Ausleitung der gefilterten Flüssigkeit durch einen im unteren Wandteil (20) des Druckbehälters (1) angeordneten Auslaß (44) erfolgt, der bei geschlossenem Druckbehälter (1) in Höhe des scheibenförmigen Raumes liegt.

2. Flüssigkeitsfilter nach Anspruch 1, **dadurch gekennzeichnet,** daß die als O-Ring ausgebildete Boden-Auflagedichtung (22) durch einen zweiten koaxialen O-Ring (47) ergänzt ist, daß die O-Ringe (22, 47) mit Abstand voneinander an dem unteren Wandteil (20) aufliegen und im Abstandbereich der O-Ringe (22, 47) in dem unteren Wandteil (20) eine Bohrung (48) zur Ableitung von Flüssigkeit angebracht ist, die an einem O-Ring (22, 47) vorbeigetreten ist.

## Claims

1. A liquids filter comprising a pressure vessel (1) and a filter cartridge (3) arranged therein and drivable by a vertical filter cartridge shaft (11), below which filter cartridge (3) there is arranged a bottom plate (7) which rests sealingly with its edge on a lower wall part (20), extending conically inwards, of the pressure vessel (1) via a bottom support seal (22), the lower wall part (20) of the pressure vessel (1) leaving free a lower opening in the pressure vessel (1) closable by the bottom plate (7), said pressure vessel (1) being opened outwardly for cleaning by raising of the bottom plate (7) and it being possible to set the filter cartridge (3) in rotation by driving the filter cartridge shaft (11), which is provided with an axial channel for conveying out the filtered liquid, characterized in that a closing plate (40) is arranged below the bottom plate (7) at a distance therefrom and parallel thereto, which closing plate (40) likewise rests with its edge on the lower wall part (20) of the pressure vessel (1) via a closing support seal (42), may be raised with the bottom plate (7) from the lower wall part (20) and encloses with the bottom plate (7) a disk-shaped space connected with the axial channel (10), via which space conveying-out of the filtered liquid may be effected through an outlet (44) arranged in the lower wall part (20) of the pressure vessel (1) when the bottom plate (7) and closing plate (40) are resting thereon, said outlet (44) lying at the level of the disk-shaped space when the pressure vessel (1) is closed.

2. A liquids filter according to claim 1, characterized in that the bottom support seal (22) constructed as an O-ring is supplemented by a second coaxial O-ring (47), in that the O-rings (22, 47) rest on the lower wall part (20) at a distance from each other and in the area of separation of the O-rings (22, 47) a bore (48) is formed in the lower wall part (20) for draining off liquid which has passed an O-ring (22, 47).

## Revendications

1. Filtre à liquides comprenant un réservoir sous pression (1) et un ensemble filtrant (3) qui est disposé à l'intérieur et peut être entraîné par un arbre vertical d'ensemble filtrant (11) et en dessous duquel se trouve une plaque de fond (7) dont le bord repose de manière étanche, par l'intermédiaire d'un joint d'appui de fond (22), sur une partie de paroi inférieure (20) formant un cône tourné vers l'intérieur et appartenant au réservoir sous pression (1), la partie de paroi inférieure (20) du réservoir sous pression (1) comportant un orifice inférieur du réservoir sous pression (1), ledit orifice pouvant être obturé par la plaque de fond (7) et, pour le nettoyage, le réservoir sous pression (1) étant ouvert vers l'extérieur en soulevant la plaque de fond (7) et l'ensemble filtrant (3) pouvant être mis en rotation par un dispositif d'entraînement de l'arbre (11) de l'ensemble filtrant, ledit arbre (11) étant pourvu d'un canal axial pour évacuer le liquide filtré, caractérisé en ce qu'en dessous de la plaque de fond (7) est disposée, à distance et parallèlement à elle, une plaque de fermeture (40) dont le bord repose également, par l'intermédiaire d'un joint d'appui de fermeture (42), sur la partie de paroi inférieure (20) du réservoir sous pression (1), qui peut être décollée de la partie de paroi inférieure (20) avec la plaque de fond (7) et qui forme, avec la plaque de fond (7), une chambre annulaire qui communique avec le canal axial (10) et par laquelle le liquide filtré peut s'évacuer, lorsque la plaque de fond (7) et la plaque de fermeture (40) sont en appui, à travers une évacuation (44) qui est ménagée dans la partie de paroi inférieure (20) du réservoir sous pression (1) et qui, lorsque le réservoir sous pression (1) est fermé, se trouve à hauteur de la chambre annulaire.

2. Filtre à liquides selon la revendication 1, caractérisé en ce que le joint d'appui de fond (22) conçu en forme de joint torique est complété par un second joint torique coaxial (47), en ce que les joints toriques (22, 47) sont appliqués contre la partie de paroi inférieure (20) à distance l'un de l'autre et, dans la zone séparant les joints toriques (22, 47), un perçage (48) est pratiqué dans la partie de paroi inférieure (20) pour évacuer le liquide qui s'est infiltré sous l'un des joints toriques (22, 47).
